(19) Europäisches Patentamt / European Patent Office / Office européen des brevets

(11) **EP 3 632 971 A1**

(12) **EUROPEAN PATENT APPLICATION**
published in accordance with Art. 153(4) EPC

(43) Date of publication:
**08.04.2020 Bulletin 2020/15**

(51) Int Cl.:
***C08J 9/00*** *(2006.01)*

(21) Application number: **18810100.0**

(22) Date of filing: **31.05.2018**

(86) International application number:
**PCT/JP2018/021074**

(87) International publication number:
**WO 2018/221688 (06.12.2018 Gazette 2018/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2017 JP 2017108645**

(71) Applicant: **Nitto Denko Corporation**
**Ibaraki-shi, Osaka 567-8680 (JP)**

(72) Inventor: **INOUE Takeo**
**Ibaraki-shi**
**Osaka 567-8680 (JP)**

(74) Representative: **Müller-Boré & Partner**
**Patentanwälte PartG mbB**
**Friedenheimer Brücke 21**
**80639 München (DE)**

(54) **POLYTETRAFLUOROETHYLENE POROUS FILM**

(57)    A porous polytetrafluoroethylene membrane (20) of the present disclosure has an average pore diameter of 0.03 to 0.2 μm and a porosity of more than 25% and not more than 90%. The number of pores present in a region having a width of 23 μm and a thickness of 1 μm in a cross-section parallel to the thickness direction is in the range from 40 to 120. The porous polytetrafluoroethylene membrane (20) is made of polytetrafluoroethylene having a number-average molecular weight in the range from 2,000,000 to 12,000,000, and a puncture strength per unit thickness is in the range from 5.0 to 15 gf/μm.

FIG.1

**Description**

TECHNICAL FIELD

The present disclosure relates to a porous polytetrafluoroethylene membrane.

BACKGROUND ART

Porous polytetrafluoroethylene (PTFE) membranes are used in various applications such as filters, sound-transmitting membranes, gas-permeable membranes, diaphragms, and liquid absorbers.

Porous PTFE membranes are generally produced by a method called a paste extrusion method (Patent Literature 1). In the paste extrusion method, an organic solvent serving as a forming aid is added to a PTFE powder to prepare a PTFE paste. The PTFE paste is formed into a rod shape, and the rod-shaped body is then formed into a sheet-shaped body with an extruder. The sheet-shaped body is rolled before the forming aid evaporates. The rolled sheet-shaped body is processed into a porous PTFE membrane through steps such as drying and sintering.

CITATION LIST

Patent Literature

Patent Literature 1: JP 10(1998)-30031 A

SUMMARY OF INVENTION

Technical Problem

Porous PTFE membranes produced by conventional methods have a relatively large average pore diameter and a relatively high porosity. The average pore diameter and the porosity can be adjusted to some extent by changing conditions such as the molecular weight of PTFE as a raw material, the rolling ratio, and the stretch ratio. However, there is a limit to the degree of freedom in the adjustment.

With the foregoing in mind, it is an object of the present disclosure to provide a porous PTFE membrane that has a structure difficult to produce by conventional methods and also has high strength.

Solution to Problem

That is, the present disclosure provides a porous polytetrafluoroethylene membrane having an average pore diameter in a range from 0.03 to 0.2 $\mu$m and a porosity of more than 25% and not more than 90%, wherein the number of pores present in a region having a width of 23 $\mu$m and a thickness of 1 $\mu$m in a cross-section parallel to a thickness direction is in a range from 40 to 120, the porous polytetrafluoroethylene membrane is made of polytetrafluoroethylene having a number-average molecular weight in a range from 2,000,000 to 12,000,000, and a puncture strength per unit thickness is in a range from 5.0 to 15 gf/$\mu$m.

Advantageous Effects of Invention

According to the present disclosure, it is possible to provide a porous PTFE membrane that has high strength while it has a small average pore diameter of 0.03 to 0.2 $\mu$m and a high porosity of more than 25% and not more than 90%. Moreover, PTFE with a large molecular weight not only contributes to the improvement of the strength (the cohesive strength and the puncture strength per unit thickness) of the porous PTFE membrane, but also is advantageous from the viewpoint of reducing the average pore diameter of the porous PTFE membrane.

BRIEF DESCRIPTION OF DRAWINGS

FIG. 1 illustrates steps in a method for producing a porous PTFE membrane according to the present embodiment.
FIG. 2 illustrates a method for measuring a cohesive strength.
FIG. 3 illustrates a method for measuring a puncture strength.
FIG. 4 is a graph showing the results of cohesive strength measurement and puncture strength measurement.

FIG. 5A is a cross-sectional SEM image of a porous PTFE membrane of Sample 1.
FIG. 5B is a cross-sectional SEM image of a porous PTFE membrane of Sample 2.
FIG. 5C is a cross-sectional SEM image of a porous PTFE membrane of Sample 3.
FIG. 5D is a cross-sectional SEM image of a porous PTFE membrane of Sample 4.
FIG. 5E is a cross-sectional SEM image of a porous PTFE membrane of Sample 5.
FIG. 5F is a cross-sectional SEM image of a porous PTFE membrane of Sample 7.
FIG. 5G is a cross-sectional SEM image of a porous PTFE membrane of Sample 9.
FIG. 5H is a cross-sectional SEM image of a porous PTFE membrane of Sample 10.

DESCRIPTION OF EMBODIMENTS

In the conventional paste extrusion method, the sheet-shaped body is already porous at a stage prior to the drying step. Accordingly, the porous PTFE membrane produced after being subjected to the drying step and the sintering step has a relatively large average pore diameter and also a relatively high porosity. For example, by using PTFE with a large molecular weight as a raw material, a porous PTFE membrane having a small average pore diameter is obtained. However, it is difficult to reduce the average pore diameter greatly.

The inventor of the present disclosure conducted in-depth studies in order to produce a porous PTFE membrane that has a small average pore diameter while it has a high porosity, and as a result, he succeeded in developing a porous PTFE membrane to be described below. The obtained porous PTFE membrane not only has a small average pore diameter and a high porosity but also has sufficient strength owing to its characteristic structure. Accordingly, the porous PTFE membrane of the present disclosure can be used suitably in various applications where a small average pore size and a high porosity are required.

An embodiment of the present disclosure will be described below with reference to the drawings. It should be noted that the present disclosure is not limited to the following embodiment.

A porous PTFE membrane of the present embodiment has a network structure composed of nodes and fibrils. A large number of pores included in the network structure include a plurality of interconnected pores, which impart air permeability to the porous PTFE membrane between a first main surface and a second main surface of the porous PTFE membrane. Of course, independent pores that do not contribute to air permeation may also be present.

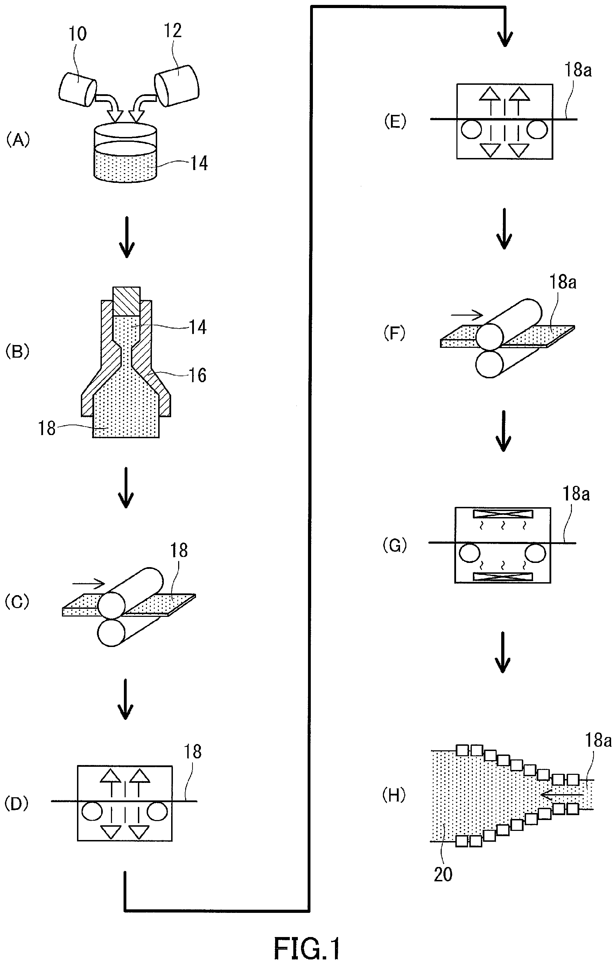

The porous PTFE membrane of the present embodiment can be produced by the method illustrated in FIG. 1. In the method illustrated in FIG. 1, a sheet-shaped body of PTFE is prepared from a mixture of a PTFE powder and a forming aid, the sheet-shaped body is sintered at a temperature higher than the melting point of PTFE to form a nonporous PTFE membrane, and the nonporous PTFE membrane is stretched in a predetermined direction.

First, a PTFE powder 10 and a forming aid 12 (liquid lubricant) are mixed together to prepare a PTFE paste 14 (paste preparation step (A)). The PTFE powder 10 may be a commercially available product produced by a known method such as emulsion polymerization. Primary particles of the PTFE powder 10 have an average particle diameter in the range from 0.2 to 1.0 $\mu$m, for example. The forming aid 12 may be a hydrocarbon oil such as liquid paraffin or naphtha. For example, 5 to 50 parts by mass of the forming aid 12 may be used with respect to 100 parts by mass of the PTFE powder 10. The term "average particle diameter" as used herein means the particle diameter (D50) when the cumulative number of particles reaches 50% in the particle size distribution measured according to a laser diffraction scattering method.

In the present embodiment, the molecular weight (number-average molecular weight) of PTFE constituting the PTFE powder 10, in other words, the molecular weight of PTFE constituting the porous PTFE membrane is in the range from 2,000,000 to 12,000,000, for example. The lower limit of the molecular weight of PTFE may be 3,000,000 or 4,000,000. The upper limit of the molecular weight of PTFE may be 10,000,000. By using PTFE having a large molecular weight, a PTFE membrane with high strength (the cohesive strength and the puncture strength per unit thickness) can be obtained easily. PTFE having a large molecular weight has long molecular chains, and it is thus difficult to form a structure in which the molecular chains are aligned regularly. In this case, amorphous moieties become longer, whereby the degree of entanglement between molecules increases. When the degree of entanglement between molecules is high, the porous PTFE membrane is considered to be less likely to be deformed by a load applied thereto and to exhibit excellent mechanical strength. In addition, by using PTFE having a large molecular weight, a porous PTFE membrane having a small average pore diameter can be obtained easily. At the time of stretching the PTFE membrane, fibers are elongated from one morphology and other fibers are elongated from another new morphology, whereby pore development in the PTFE membrane is promoted. When PTFE having a large molecular weight is used, entanglement of molecules occurs more easily during the elongation of fibers. It is considered that this reduces the lengths of the fibers elongated from one morphology, resulting in reduction of the average pore diameter of the PTFE porous membrane.

Examples of the method for measuring the number-average molecular weight of PTFE include a method for determining the number-average molecular weight from the standard specific gravity and a measurement method based on the dynamic viscoelasticity during melting. The method for determining the number-average molecular weight from the standard specific gravity can be performed by a water displacement method in accordance with ASTM D-792 using a sample formed in accordance with ASTM D-4895 98. The measurement method based on the dynamic viscoelasticity is described by S. Wu in Polymer Engineering & Science, 1988, Vol. 28, 538 and Polymer Engineering & Science, 1989, Vol. 29, 273, for example.

Next, a sheet-shaped body of PTFE is prepared from the PTFE paste 14 (forming step (B)). In the present embodiment, the PTFE paste 14 is preformed into a cylindrical shape, and then formed into a sheet shape using an extruder 16. A sheet-shaped body 18 thus obtained may be rolled in the longitudinal direction (MD direction) to adjust the thickness thereof, when necessary (rolling step (C)). It is also possible to prepare the sheet-shaped body 18 by rolling the PTFE paste 14 that is in a rod shape without using the extruder 16. The thickness of the sheet-shaped body 18 is in the range from 0.1 to 1.0 mm, for example.

Next, the forming aid 12 is removed from the sheet-shaped body 18. Specifically, the forming aid 12 is removed from the sheet-shaped body 18 by heating and drying the sheet-shaped body 18 (drying step (D)). This drying step can be performed by placing the sheet-shaped body 18 in an environment at a temperature that is lower than the melting point of PTFE and at which the forming aid 12 can be evaporated quickly. For example, the sheet-shaped body 18 is heated at a temperature (ambient temperature) of 100°C to 250°C to remove the forming aid 12. It is also possible to remove the forming aid 12 by extracting the forming aid 12 from the sheet-shaped body 18 using an organic solvent. The drying step can be performed by, for example, heating the sheet-shaped body 18 that is in a belt-like form while conveying the sheet-shaped body 18. This also applies to a sintering step and an annealing step to be described below.

Next, the dried sheet-shaped body 18 is sintered (sintering step (E)). The sheet-shaped body 18 can be sintered by heating the sheet-shaped body 18 at a temperature higher than the melting point of PTFE. The sheet-shaped body 18 is porous at a stage prior to the sintering. Specifically, the sheet-shaped body 18 is porous at a point in time when it is extruded from the extruder 16. When the porous sheet-shaped body 18 is heated at a temperature sufficiently higher than the melting point (about 327°C) of PTFE, the pores are closed as a result of flowing of PTFE, whereby the sheet-shaped body 18 becomes nonporous. That is, the sintering step can be a step for making the sheet-shaped body 18 nonporous to prepare a nonporous PTFE membrane 18a. The sheet-shaped body 18 with the pores is opaque and white, whereas the nonporous PTFE membrane 18a is transparent.

In conventional production methods, a sheet-shaped body of PTFE, which has not been made nonporous, is stretched and then sintered. In this case, it is difficult to produce a porous PTFE membrane having a small average pore diameter. In contrast, according to the present embodiment, the pores are collapsed by heating at a high temperature to form the nonporous PTFE membrane 18a temporarily. Thereafter, the nonporous PTFE membrane 18a is stretched at least in a uniaxial direction (e.g., the transverse direction) to produce a porous PTFE membrane. According to this method, it is possible to produce a porous PTFE membrane having a small average pore diameter and a high porosity.

In the sintering step, the sheet-shaped body 18 is heated at a temperature (ambient temperature) of 330°C to 500°C, for example. The sintering time is from 1 to 30 minutes, for example. The drying step and the sintering step may be performed in the air or in an inert atmosphere such as a nitrogen atmosphere. The drying step may be omitted, and only the sintering step may be performed.

Next, the nonporous PTFE membrane 18a is rolled in the MD direction, when necessary (rolling step (F)). The rolling step is performed by, for example, passing the nonporous PTFE membrane 18a between a pair of pressure rolls. The thickness of the nonporous PTFE membrane 18a can be adjusted to a desired value through the rolling step. The rolling ratio is from 1.1 to 6.0, for example. The rolling ratio is represented by the ratio of the thickness after the rolling to the thickness before the rolling. The thickness of the nonporous PTFE membrane 18a after the rolling is from 30 to 300 $\mu$m, for example.

The rolling step is effective not only in adjusting the thickness but also in improving the strength of the porous PTFE membrane. When the nonporous PTFE membrane 18a is rolled, the molecules of PTFE come into close contact with each other, and it is considered that this results in the improvement of the strength, especially the cohesive strength, of the porous PTFE membrane. By using PTFE having a relatively large molecular weight as a raw material and performing the rolling step after making the sheet-shaped body nonporous, a porous PTFE membrane with sufficient strength is obtained.

Next, the nonporous PTFE membrane 18a is annealed (annealing step (G)). By performing the annealing step before stretching the nonporous PTFE membrane 18a, the nonporous PTFE membrane 18a can be stretched more easily, which allows fine pores with a uniform size to be formed.

The procedure of the annealing step is not particularly limited as long as the crystallinity of PTFE can be improved by the annealing step. For example, the annealing step can be performed in a plurality of stages including a first stage and a second stage. In the first stage, the nonporous PTFE membrane 18a is heated at a temperature that is lower than the sintering temperature in the sintering step and is higher than the melting point of PTFE. Specifically, in the first stage, the nonporous PTFE membrane 18a is heated at a temperature (ambient temperature) of 350°C to 500°C. The heating time in the first stage is from 10 minutes to 5 hours, for example. In the second stage, the nonporous PTFE membrane 18a is heated at a temperature lower than the melting point of PTFE. Specifically, in the second stage, the nonporous PTFE membrane 18a is heated at a temperature (ambient temperature) of 250°C to 330°C. The heating time in the second stage is from 30 minutes to 20 hours, for example. Of course, only the first stage may be performed as the annealing step, or only the second stage may be performed as the annealing step. The annealing step may be performed in the air or in an inert atmosphere such as a nitrogen atmosphere. Also, the annealing step may be performed by winding the nonporous PTFE membrane 18a around a roll and placing the nonporous PTFE membrane 18a wound around the roll in a heat treatment furnace set at a temperature in the above-described range with a treatment time being set in the above-described range.

The annealing step is not essential, and may be omitted in some cases. In addition, the annealing step may be performed between the sintering step and the rolling step.

Finally, the nonporous PTFE membrane 18a is stretched in the transverse direction (TD direction) (stretching step (H)). The stretch ratio is from 1.1 to 10, for example. The stretching step may be performed by a known tenter method in an environment at a temperature lower than the melting point of PTFE, e.g., a temperature from 50°C to 300°C. The nonporous PTFE membrane 18a may be stretched not only in the TD direction but also in the MD direction. Further, the stretching in the TD direction may be performed after the stretching in the MD direction. The order of performing the stretching in these directions is not particularly limited.

Through the above-described steps, a porous PTFE membrane 20 having a small average pore diameter and a high porosity is obtained. The thickness of the porous PTFE membrane 20 is in the range from 1 to 200 $\mu$m, for example. The lower limit of the thickness of the porous PTFE membrane 20 may be 5 $\mu$m. The upper limit of the thickness of the porous PTFE membrane 20 may be 100 $\mu$m. The average pore diameter is, for example, in the range from 0.03 to 0.2 $\mu$m, and typically in the range from 0.03 to 0.1 $\mu$m. The lower limit of the average pore diameter may be 0.04 $\mu$m. The upper limit of the average pore diameter may be 0.16 $\mu$m or 0.07 $\mu$m.

The porosity of the porous PTFE membrane 20 is, for example, more than 25% and not more than 90%. The lower limit of the porosity may be 30%, 40%, or 50%. The upper limit of the porosity may be 80% or 58%.

The average pore diameter can be measured by a method in accordance with American Society for Testing and Materials (ASTM) F316-86. The porosity can be calculated by substituting the mass M (g) of the porous PTFE membrane, the volume V (cm$^3$) of the porous PTFE membrane, and the true density D (g/cm$^3$) of PTFE into the following equation. The true density of PTFE is 2.18 g/cm$^3$.

$$\text{Porosity (\%)} = \{1 - (\text{M}/(\text{V} \cdot \text{D}))\} \times 100$$

Observation of a cross-section parallel to the thickness direction reveals that the porous PTFE membrane 20 of the present embodiment has resin portions that are tightly linked to each other in the thickness direction. Specifically, the number of pores present in a predetermined region having a width of 23 $\mu$m and a thickness of 1 $\mu$m in the cross-section parallel to the thickness direction is in the range from 40 to 120. It is considered that such a structure is one of the factors that allow the porous PTFE membrane 20 of the present embodiment to have higher strength than porous PTFE membranes produced by conventional methods. The cross-section of the porous PTFE membrane can be observed using a scanning electron microscope (SEM).

The number of the pores can be counted by a method to be described below. First, the cross-sectional SEM image of the porous PTFE membrane is binarized using general-purpose image analysis software (e.g., Image-J). In the case where black portions in the binarized image correspond to the pores, the number of the pores can be specified by counting the number of the black portions present in the predetermined region. Regarding a black portion present on the boundary of the predetermined region, it is determined that the black portion is present in the predetermined region when the black portion satisfies the condition that at least half (in terms of the area ratio) of the black portion is inside the predetermined region. Also, the average pore diameter can be calculated by dividing the area of the black portions in the binarized image by the number of the black portions. At the time of binarizing the cross-sectional SEM image, the threshold between white portions (resin portions) and black portions (pore portions) can be determined by the following equation.

$$\text{Threshold} = ((\text{Average luminance in entire image}) + \text{Average luminance in target portions (black portions)})/2$$

The porous PTFE membrane 20 of the present embodiment has a cohesive strength (180° peel strength) in the range from 10 to 20 N/25 mm, for example. It is considered that a high cohesive strength is produced owing to the dense structure in the thickness direction. The lower limit of the cohesive strength of the porous PTFE membrane 20 may be 12 N/25 mm. The upper limit of the cohesive strength of the porous PTFE membrane 20 may be 18 N/25 mm or 16 N/25 mm.

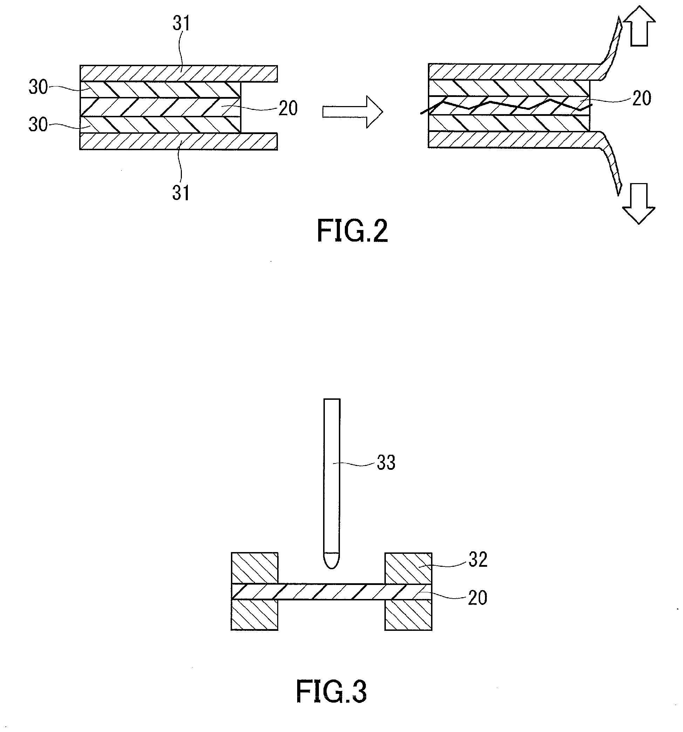

The cohesive strength of the porous PTFE membrane 20 can be measured by the method to be described below in accordance with Japanese Industrial Standards JIS Z 0237 (2009). First, the porous PTFE membrane 20 is cut into a size of 100 mm × 25 mm to prepare a test piece. The test piece has a dimension of 100 mm along the MD direction of the porous PTFE membrane 20 and a dimension of 25 mm along the TD direction of the porous PTFE membrane 20. The MD direction and the TD direction are directions defined at the time of producing the porous PTFE membrane 20. Next, as shown in FIG. 2, an adhesive 30 is applied to both surfaces of the porous PTFE membrane 20, and aluminum foils 31 are attached to the respective surfaces. Thus, a test sample for cohesive strength measurement is obtained. An end portion of one of the aluminum foils 31 is chucked, and the other aluminum foil 31 is pulled in a 180-degree opposite direction under conditions of a rate of 60 mm/min, 25°C, and 60% RH, thereby causing cohesive failure in the porous PTFE membrane 20. Measured values for the initial 25 mm length after the start of the measurement are ignored, and measured values (unit: N) recorded continuously for the subsequent 50 mm length in the test piece are averaged. The thus-obtained average value is regarded as the cohesive strength of the porous PTFE membrane 20.

The porous PTFE membrane 20 of the present embodiment has a puncture strength in the range from 400 to 1000 gf, for example. It is considered that a high puncture strength is produced owing to the dense structure in the thickness direction. The puncture strength changes with the thickness of the porous PTFE membrane 20. The puncture strength per unit thickness is suitable as the index of the strength of the porous PTFE membrane 20. The puncture strength per unit thickness of the porous PTFE membrane 20 of the present embodiment is in the range from 5.0 to 15 gf/$\mu$m. The lower limit of the puncture strength per unit thickness may be 6.0 gf/$\mu$m. The upper limit of the puncture strength per unit thickness may be 10 gf/$\mu$m or 9.0 gf/$\mu$m.

The puncture strength can be measured by the method to be described below in accordance with Japanese Industrial Standards JIS Z 1707 (1997). As shown in FIG. 3, in the measurement of the puncture strength, the porous PTFE membrane 20 serving as a test piece is fixed to a jig 32. A semicircular needle 33 having a diameter of 1.0 mm and a tip shape with a radius of 0.5 mm is thrusted into the test piece at a rate of 6 mm/min, and the maximum force until the needle passes through the test piece is measured. The measurement is performed with respect to five or more test pieces, and the measured values are averaged. The thus-obtained average value is regarded as the puncture strength of the porous PTFE membrane 20.

The porous PTFE membrane 20 of the present embodiment can be used in various applications such as filters, sound-transmitting membranes, gas-permeable membranes, diaphragms, liquid absorbers, sealing materials, and pressure sensors. For example, in the case of a pressure-sensitive adhesive tape obtained by applying an adhesive to a porous PTFE membrane, cohesive failure may occur in the porous PTFE membrane, which serves as a backing, at the time of unwinding the pressure-sensitive adhesive tape from a roll or peeling off the pressure-sensitive adhesive tape from a mount. Since cohesive failure is less likely to occur in the porous PTFE membrane having a high cohesive strength, the porous PTFE membrane is suitable as a backing of a pressure-sensitive adhesive tape. Moreover, in applications such as sound-transmitting membranes, gas-permeable membranes, and the like, the membranes may be damaged by contact with a protrusion or the like. The porous PTFE membrane having a high puncture strength is suitable for such applications.

For example, use of the porous PTFE membrane having a small average pore diameter as a filtration membrane enables collection of finer particles. Also, use of the porous PTFE membrane having a small average pore diameter as a gas-permeable membrane or a sound-transmitting membrane can be expected to improve the pressure resistance. On the other hand, use of the porous PTFE membrane with a large porosity in wet applications such as filtration membranes can be expected to improve the water permeability, and use of the same in dry applications such as gas-permeable membranes and sound-transmitting membranes can be expected to increase the amount of air permeation and to improve the sound transmissibility.

EXAMPLES

The present disclosure will be described more specifically below by way of examples. It should be noted that the present disclosure is not limited to the examples presented below.

(Sample 1)

20 parts by weight of n-dodecane (Japan Energy Corporation) as a forming aid was mixed into 100 parts by weight of a PTFE fine powder (Daikin Industries, Ltd., F104 (standard specific gravity: 2.17, number-average molecular weight: 6,000,000)) to prepare a PTFE paste containing the PTFE fine powder and the n-dodecane. This PTFE paste was preformed into a cylindrical shape, and then formed into a sheet shape using a ram extruder. The thus-obtained sheet-shaped body was passed between a pair of metal rolls and thus rolled in the MD direction to a thickness of 0.2 mm. Furthermore, the sheet-shaped body was dried at 150°C to remove the forming aid. The dried sheet-shaped body was sintered at 400°C for 5 minutes. The thus-obtained nonporous PTFE membrane was rolled in the MD direction so as to adjust the thickness thereof to 0.1 mm.

Next, the nonporous PTFE membrane was heat-treated at 380°C for 4 hours, and then heat-treated at 315°C for 15 hours (annealing step). The nonporous PTFE membrane after being subjected to the heat treatments was left in the heat treatment furnace to allow it to cool slowly. Finally, in a tenter heated to 300°C, the nonporous PTFE membrane was stretched in the TD direction at a strain rate of 100%/sec and a stretch ratio of 3.0, and then stretched in the MD direction at a strain rate of 100%/sec and a stretch ratio of 2.0. Thus, a porous PTFE membrane of Sample 1 was obtained. The thickness of the porous PTFE membrane of Sample 1 was 91 μm. The thickness of the porous PTFE membrane was measured using a digital upright gauge (OZAKI MFG. CO., LTD., R1-205, gauge head diameter: φ5 mm, measuring force: 1.1 N or less). The thickness was measured at five points in the porous PTFE membrane in an environment of 25°C ± 2°C and 65% ± 20% RH, and the average value of the measured values was calculated as the thickness of the porous PTFE membrane.

(Sample 2)

A porous PTFE membrane of Sample 2 was produced in the same manner as Sample 1, except that the stretch ratio in the MD direction was changed to 1.5.
The thickness of the porous PTFE membrane of Sample 2 was 107 μm.

(Sample 3)

The nonporous PTFE membrane (thickness: 0.2 mm) prepared in the production of Sample 1 was rolled in the MD direction at a rolling ratio of 2.0. The annealing step was omitted. Thereafter, in a tenter heated to 300°C, the nonporous PTFE membrane was stretched in the TD direction at a strain rate of 100%/sec and a stretch ratio of 3.0. Thus, a porous PTFE membrane of Sample 3 was obtained. The thickness of the porous PTFE membrane of Sample 3 was 99 μm.

(Sample 4)

A porous PTFE membrane of Sample 4 was produced in the same manner as Sample 3, except that the stretch ratio in the TD direction was changed to 4.0. The thickness of the porous PTFE membrane of Sample 4 was 95 μm.

(Sample 5)

A porous PTFE membrane of Sample 5 was produced in the same manner as Sample 3, except that the rolling ratio in the MD direction was changed to 3.0. The thickness of the porous PTFE membrane of Sample 5 was 96 μm.

(Sample 6)

A porous PTFE membrane of Sample 6 was produced in the same manner as Sample 3, except that the temperature of the tenter during the stretching in the TD direction was changed to 350°C and that the stretch ratio in the TD direction was changed to 6.0. The thickness of the porous PTFE membrane of Sample 6 was 89 μm.

(Sample 7)

20 parts by weight of n-dodecane (Japan Energy Corporation) as a forming aid was mixed into 100 parts by weight of a PTFE fine powder (Daikin Industries, Ltd., F104) to prepare a PTFE paste containing the PTFE fine powder and the n-dodecane. This PTFE paste was preformed into a cylindrical shape, and then formed into a sheet shape using a ram extruder. The thus-obtained sheet-shaped body was passed between a pair of metal rolls and thus rolled in the MD direction to a thickness of 0.2 mm. Furthermore, the sheet-shaped body was dried at 150°C to remove the forming aid.

Next, the obtained sheet-shaped body was stretched in the MD direction at 260°C and a stretch ratio of 1.5, and then stretched in the TD direction at 150°C and a stretch ratio of 6.5. Thus, an unsintered porous PTFE membrane was obtained. Finally, the unsintered porous PTFE membrane was sintered at 360°C for 10 minutes. Thus, a porous PTFE membrane of Sample 7 was obtained. The thickness of the porous PTFE membrane of Sample 7 was 75 μm.

(Sample 8)

A porous PTFE membrane of Sample 8 was produced in the same manner as Sample 7, except that the sheet-shaped body was rolled in the MD direction to a thickness of 0.23 mm by being passed between the pair of metal rolls and that the stretch ratio in the MD direction was changed to 3.2. The thickness of the porous PTFE membrane of Sample 8 was 80 μm.

(Sample 9)

A porous PTFE membrane of Sample 9 was produced in the same manner as Sample 1, except that a PTFE fine powder having a number-average molecular weight of 4,000,000 (Asahi Glass Co., Ltd., CD126E (standard specific gravity: 2.18, number-average molecular weight: 4,000,000)) was used. The thickness of the porous PTFE membrane of Sample 9 was 89 μm.

(Sample 10)

A porous PTFE membrane of Sample 10 was produced in the same manner as Sample 1, except that a PTFE fine powder having a number-average molecular weight of 10,000,000 (Asahi Glass Co., Ltd., CD123E (standard specific gravity: 2.16, number-average molecular weight: 10,000,000)) was used and that the stretch ratio in the MD direction was changed to 1.5. The thickness of the porous PTFE membrane of Sample 9 was 103 μm.

[Porosity, Average Pore Diameter, Puncture strength, Cohesive strength]

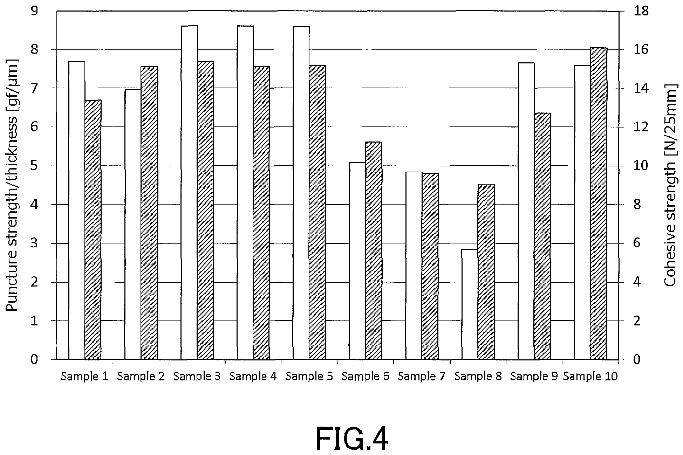

The porosity, average pore diameter, puncture strength, and cohesive strength of each of the porous PTFE membranes of Samples 1 to 10 were measured according to the methods described above. The measurement of the average pore diameter was performed using a commercially available measuring device (Porous Materials, Inc., Perm-Porometer). A test sample for cohesive strength measurement was prepared by attaching aluminum foils to both surfaces of the porous PTFE membrane with an adhesive (Mitsui Chemicals, Inc., ADMER) and heat-treating the thus-obtained laminate under conditions of 225°C, 15 seconds, and 10 kN. The measurement of the cohesive strength was performed using a tensile tester (A & D Company, Limited, TENSILON universal material tester RTF series). The measurement of the puncture strength was performed using a table-top type universal tester (Shimadzu Corporation, Autograph AGS-X series). The results are shown in Table 1 and FIG. 4. In the graph of FIG. 4, white bars represent the puncture strength and the hatched bars represent the cohesive strength.

[Cross-Sectional SEM Images]

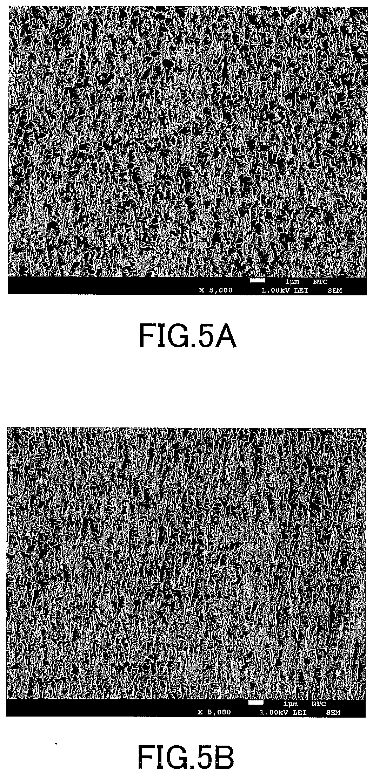

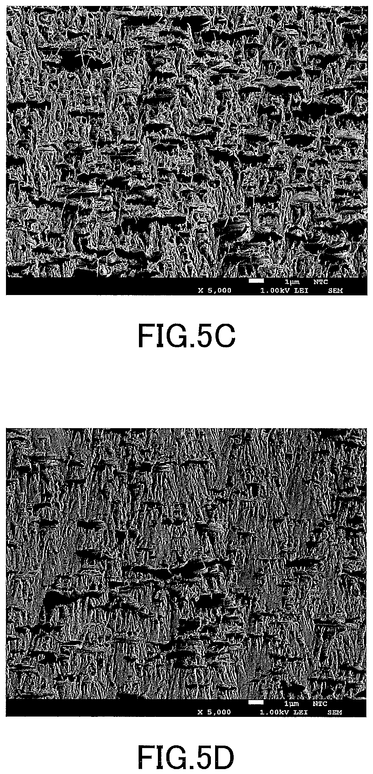

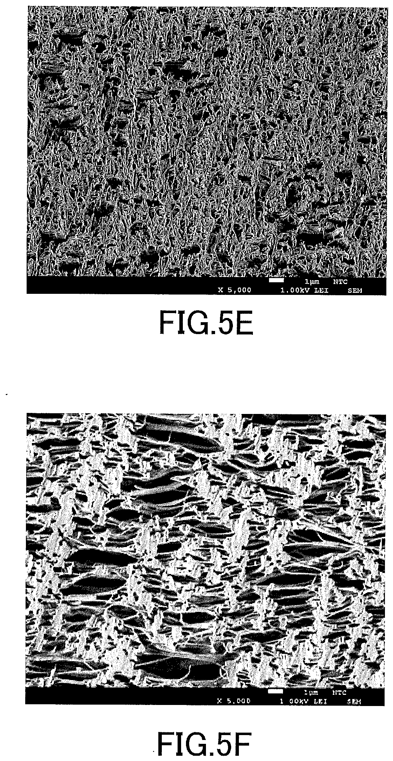

The porous PTFE membranes of Samples 1 to 5, 7, 9, and 10 were cut parallel to the thickness direction, and their cross-sections were observed with a scanning electron microscope (at 5000 × magnification). Specifically, each sample was sandwiched between carbon nanotube sheets, and then was subjected to ion milling processing using an ion milling system (Hitachi High-Technologies Corporation, E-3500). Each sample was cut parallel to the TD direction and to the thickness direction to expose a cross-section. The cross-section of each sample was subjected to a conductive treatment and observed using a scanning electron microscope. The cross-sectional SEM images obtained are shown in FIGS. 5A to 5H.

Furthermore, in each cross-sectional SEM image, the number of pores present in a predetermined region whose center is at the central position in the thickness direction of the porous PTFE membrane (the position at a depth corresponding to 50% of the entire depth from the surface) and having a width of 23 μm and a thickness of 18 μm was counted by the method described above. The results are shown in Table 1.

[Table 1]

| | Porosity [%] | Average pore diameter [μm] | Thickness [μm] | Puncture strength [gf] | Puncture strength/ thickness [gf/ μm] | Cohesive strength [N/ 25 mm] | The number of pores in cross-section |
|---|---|---|---|---|---|---|---|
| Sample 1 | 67 | 0.066 | 91 | 700 | 7.69 | 13.4 | 1250 (69) |
| Sample 2 | 58 | 0.056 | 107 | 746 | 6.97 | 15.1 | 1490 (83) |
| Sample 3 | 50 | 0.059 | 99 | 851 | 8.60 | 15.4 | 1000 (56) |

(continued)

| | Porosity [%] | Average pore diameter [μm] | Thickness [μm] | Puncture strength [gf] | Puncture strength/ thickness [gf/ μm] | Cohesive strength [N/ 25 mm] | The number of pores in cross-section |
|---|---|---|---|---|---|---|---|
| Sample 4 | 50 | 0.063 | 95 | 817 | 8.60 | 15.1 | 1260 (70) |
| Sample 5 | 51 | 0.060 | 96 | 825 | 8.59 | 15.2 | 1650 (92) |
| Sample 6 | 72 | 0.16 | 89 | 452 | 5.08 | 11.2 | 840 (47) |
| Sample 7 | 70 | 0.2 | 75 | 363 | 4.84 | 9.6 | 650 (36) |
| Sample 8 | 85 | 3.0 | 80 | 226 | 2.83 | 9.0 | - |
| Sample 9 | 68 | 0.070 | 89 | 681 | 7.65 | 12.7 | 1040 (58) |
| Sample 10 | 52 | 0.048 | 103 | 782 | 7.59 | 16.1 | 2030 (113) |

As can be seen in Table 1, the porous PTFE membranes of Samples 1 to 6, 9, and 10 exhibited high porosities while they had very small average pore diameters. The porous PTFE membranes of Samples 1 to 6, 9, and 10 exhibited sufficiently high cohesive strengths and sufficiently high puncture strengths (puncture strengths per unit thickness). The porous PTFE membranes of Samples 3 to 5 and 10 exhibited particularly high puncture strengths. The porous PTFE membranes of Samples 2 to 5 exhibited particularly high cohesive strengths. On the other hand, the porous PTFE membrane of Sample 7 exhibited a high porosity and a relatively small average pore diameter, but the cohesive strength and the puncture strength thereof were low. The porous PTFE membrane of Sample 6 exhibited a porosity and an average pore diameter that were almost the same as those of the porous PTFE membrane of Sample 7. However, the cohesive strength and the puncture strength of the porous PTFE membrane of Sample 6 were superior to those of the porous PTFE membrane of Sample 7. The porous PTFE membrane of Sample 8 exhibited a high porosity, but the average pore diameter thereof was relatively large. Furthermore, the cohesive strength and the puncture strength of the porous PTFE membrane of Sample 8 were low.

The porosities of the porous PTFE membranes of Samples 1 to 6, 9, and 10 were 67%, 58%, 50%, 50%, 51%, 72%, 68%, and 52%, respectively. The upper limit of the porosity may be defined by a value selected from these values. Also, the lower limit of the porosity may be defined by a value selected from these values.

The average pore diameters of the porous PTFE membranes of Samples 1 to 6, 9, and 10 were 0.066, 0.056, 0.059, 0.063, 0.060, 0.16, 0.070, and 0.048, respectively. The upper limit of the average pore diameter may be defined by a value selected from these values. Also, the lower limit of the average pore diameter may be defined by a value selected from these values.

The puncture strengths per unit thickness of the porous PTFE membranes of Samples 1 to 6, 9, and 10 were 7.69, 6.97, 8.60, 8.60, 8.59, 5.08, 7.65, and 7.59 (unit: gf/μm), respectively. The upper limit of the puncture strength per unit thickness may be defined by a value selected from these values. Also, the lower limit of the puncture strength per unit thickness may be defined by a value selected from these values.

The cohesive strength of the porous PTFE membranes of Samples 1 to 6, 9, and 10 were 13.4, 15.1, 15.4, 15.1, 15.2, 11.2, 12.7, and 16.1 (unit: N/25 mm), respectively. The upper limit of the cohesive strength may be defined by a value selected from these values. Also, the lower limit of the cohesive strength may be defined by a value selected from these values.

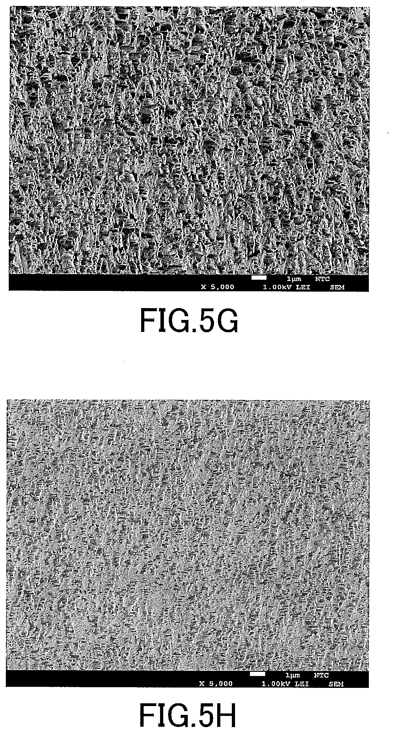

As can be seen in FIG. 5F, the porous PTFE membrane of Sample 7 had a coarse cross-sectional structure. In contrast, as can be seen in FIGS. 5A to 5E, 5G, and 5H, the porous PTFE membranes of Samples 1 to 5, 9, and 10 had dense cross-sectional structures. In other words, in the porous PTFE membranes of Samples 1 to 5, 9, and 10, linkage between the resin portions (white portions) in the thickness direction was tight. This is considered to be reflected in the number of the pores present in the predetermined region having a width of 23 μm and a thickness of 18 μm. It is considered that this caused the porous PTFE membranes of Samples 1 to 5, 9, and 10 to exhibit the high cohesive strengths and the high puncture strengths.

The number of the pores in the above-described predetermined region was 840 in Sample 6 and 1,650 in Sample 5. In contrast, the number of the pores was 650 in Sample 7. These results demonstrate that favorable results are obtained when the number of the pores present in the predetermined region is from 800 to 2,000, desirably from 800 to 1,700.

Even when a porous PTFE membrane has a thickness of less than 18 $\mu$m, it is possible to count the number of pores present in a predetermined region whose center is at the central position in the thickness direction of the porous PTFE membrane (the position at a depth corresponding to 50% of the entire depth from the surface) and having a width of 23 $\mu$m and a thickness of 1 $\mu$m in the cross-sectional SEM image. The numerical values in parentheses in Table 1 are values obtained by converting the number of the pores present in the predetermined region having a width of 23 $\mu$m and a thickness of 18 $\mu$m into the number of the pores corresponding to the case where the predetermined region has a width of 23 $\mu$m and a thickness of 1 $\mu$m. The number of the pores was 47 in Sample 6 and 92 in Samples 5. In contrast, the number of the pores was 36 in Sample 7. These results demonstrate that favorable results can be obtained when the number of the pores present in the predetermined region having a width of 23 $\mu$m and a thickness of 1 $\mu$m is 40 or more. The upper limit of the number of the pores present in the predetermined region is 120, for example.

**Claims**

1. A porous polytetrafluoroethylene membrane having an average pore diameter in a range from 0.03 to 0.2 $\mu$m and a porosity of more than 25% and not more than 90%, wherein
   the number of pores present in a region having a width of 23 $\mu$m and a thickness of 1 $\mu$m in a cross-section parallel to a thickness direction is in a range from 40 to 120,
   the porous polytetrafluoroethylene membrane is made of polytetrafluoroethylene having a number-average molecular weight in a range from 2,000,000 to 12,000,000, and
   a puncture strength per unit thickness is in a range from 5.0 to 15 gf/$\mu$m.

2. The porous polytetrafluoroethylene membrane according to claim 1, wherein the porosity is in a range from 30% to 90%.

3. The porous polytetrafluoroethylene membrane according to claim 1, wherein the porosity is in a range from 30% to 58%.

4. The porous polytetrafluoroethylene membrane according to any one of claims 1 to 3, wherein the polytetrafluoroethylene has a number-average molecular weight in a range from 3,000,000 to 12,000,000.

5. The porous polytetrafluoroethylene membrane according to any one of claims 1 to 4, wherein the average pore diameter is in a range from 0.03 to 0.16 $\mu$m.

6. The porous polytetrafluoroethylene membrane according to any one of claims 1 to 5, wherein a cohesive strength is in a range from 10 to 20 N/25 mm.

FIG.1

FIG.2

FIG.3

FIG.4

FIG.5A

FIG.5B

FIG.5C

FIG.5D

FIG.5E

FIG.5F

FIG.5G

FIG.5H

## INTERNATIONAL SEARCH REPORT

| International application No. |
|---|
| PCT/JP2018/021074 |

**A. CLASSIFICATION OF SUBJECT MATTER**
Int.Cl. C08J9/00(2006.01)i

According to International Patent Classification (IPC) or to both national classification and IPC

**B. FIELDS SEARCHED**

Minimum documentation searched (classification system followed by classification symbols)
Int.Cl. C08J9/00

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 59-5037 A (AGENCY OF INDUSTRIAL SCIENCE AND TECHNOLOGY) 11 January 1984, page 2, upper left column, line 13 to page 4, upper left column, line 13 (Family: none) | 1-6 |
| Y | JP 57-102324 A (NITTO ELECTRIC IND CO., LTD.) 25 June 1982, page 2, upper left column, line 1 to page 5, upper right column, line 17 (Family: none) | 1-6 |
| Y | JP 51-19069 A (JUNKOSHA INC.) 16 February 1976, claims, page 2, upper left column, line 16 to page 5, upper left column, line 9 (Family: none) | 1-6 |

☒ Further documents are listed in the continuation of Box C.    ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 August 2018 (03.08.2018) | 14 August 2018 (14.08.2018) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

## INTERNATIONAL SEARCH REPORT

International application No.

PCT/JP2018/021074

C (Continuation).    DOCUMENTS CONSIDERED TO BE RELEVANT

| Category* | Citation of document, with indication, where appropriate, of the relevant passages | Relevant to claim No. |
|---|---|---|
| A | JP 53-55379 A (NITTO ELECTRIC IND CO., LTD.) 19 May 1978, see entire text (Family: none) | 1-6 |
| A | JP 7-316327 A (SUMITOMO ELECTRIC INDUSTRIES, LTD.) 05 December 1995, see entire text & US 5911926 A whole document | 1-6 |
| A | JP 2006-144028 A (EDWARDS LIFESCIENCES CORPORATION) 08 June 2006, see entire text & US 5552100 A, whole document | 1-6 |
| A | JP 1-78823 A (SUMITOMO ELECTRIC INDUSTRIES, LTD.) 24 March 1989, see entire text (Family: none) | 1-6 |
| A | JP 9-141734 A (HITACHI CABLE, LTD.) 03 June 1997, see entire text (Family: none) | 1-6 |
| A | JP 2012-36266 A (NICHIAS CORP.) 23 February 2012, claim 5 (Family: none) | 6 |
| A | JP 2005-298554 A (SUMITOMO ELECTRIC INDUSTRIES, LTD.) 27 October 2005, claim 5 & US 2007/0154699 A1, claim 5 | 6 |
| P, X | WO 2017/90247 A1 (NITTO DENKO CORP.) 01 June 2017, see entire text & JP 2017-101231 A | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10030031 A

**Non-patent literature cited in the description**

- **S. WU.** *Polymer Engineering & Science,* 1988, vol. 28, 538

- *Polymer Engineering & Science,* 1989, vol. 29, 273